# EUROPÄISCHE PATENTANMELDUNG

(11) **EP 1 820 596 A1**
(43) Veröffentlichungstag der Anmeldung: **22.08.2007**
(21) Anmeldenummer: 06125098.1
(22) Anmeldetag: 30.11.2006
(51) Int. Cl.: B23K 11/11, B23K 11/36, B23K 35/02

(54) **Vorrichtung zum Punktschweissen**

(30) Priorität: 21.02.2006 AT 2832006
(71) Anmelder: Siemens Transportation Systems GmbH & Co KG, 1110 Wien (AT)
(72) Erfinder: Lang, Georg, 1140 Wien (AT); Trampitsch, Christof, 1070 Wien (AT)
(74) Vertreter: Peham, Alois

(57) **Zusammenfassung**

Formiergaskappe (KAP) für eine Elektrode (EL1) zum Punktschweißen, wobei die Formiergaskappe (KAP) einen rohrförmigen Mantel (MAN) und einen darin entlang der Längsachse des Mantels (MAN) verschiebbaren, von der Elektrode in einem montierten Zustand durchsetzten Einsatz (EIN) aufweist, wobei der Mantel (MAN) zumindest eine Gaseinlassöffnung (EIL) aufweist, die in eine durch den Einsatz (EIN) und den Mantel (MAN) zumindest abschnittsweise begrenzte Druckkammer (KAM) mündet.

## Beschreibung

Die Erfindung betrifft eine Formiergaskappe für eine Elektrode zum Punktschweißen.

Weiters betrifft die Erfindung eine Vorrichtung zum Punktschweißen mit zwei einander gegenüberliegenden Elektroden, wobei zumindest an einer der Elektroden eine Formiergaskappe angeordnet ist.

Beim Widerstandpunktschweißen kurz Punktschweißen werden üblicherweise miteinander zu verschweißende Bleche durch zwei einander gegenüberliegende Elektroden an einem Punkt zusammengepresst. Durch die Elektroden wird ein Schweißstrom in die Bleche eingeleitet, wobei die Elektroden meistens am Ende einer Punktschweißzange oder an Zylindern sitzen. An den Schweißpunkten können meist durch eine Oxidation der Oberfläche bedingt Anlauffarben entstehen. Schweißstellen, an welchen Anlauffarben entstanden sind, beginnen leichter zu korrodieren, was vor allem im Fahrzeugbau von großem Nachteil ist. Um die Bildung von Anlauffarben zu unterbinden ist es bekannt die Schweißstelle mittels um die Elektroden angeordneten Umhüllungen, so genannten "Formiergaskappen", aus Gummi gegen die Umgebung abzuschirmen. Der Zwischenraum zwischen der Elektrode und den Wänden der auf ihr montierten Formiergaskappe ist hierbei von einem Formiergas umströmt, sodass es zu keiner Oxidation der Schweißstelle kommt.

Es ist jedoch ein Nachteil der bekannten Lösungen, dass die bekannten Formiergaskappen bauart- und materialbedingt sehr häufig ausgetauscht werden müssen, wodurch sich die Betriebskosten wesentlich erhöhen. Auch kann der Formiergasbedarf durch undichte Formiergaskappen wesentlich erhöht werden.

Es ist daher eine Aufgabe der Erfindung, das Entstehen von Anlassfarben zu reduzieren bzw. zu vermeiden und die Betriebkosten gegenüber den herkömmlichen Lösungen zu minimieren.

Diese Aufgabe wird mit einer Formiergaskappe der eingangs genannten Art erfindungsgemäß dadurch gelöst, dass die Formiergaskappe einen rohrförmigen Mantel und einen darin entlang der Längsachse des Mantels verschiebbaren, von der Elektrode in einem montierten Zustand durchsetzten Einsatz aufweist, wobei der Mantel zumindest eine Gaseinlassöffnung aufweist, die in eine durch den Einsatz und den Mantel zumindest abschnittsweise begrenzte Druckkammer mündet.

Es ist ein Verdienst der Erfindung, unter anderem auch eine Automatisierung des Abschirmens der Schweißstelle zu ermöglichen, da der Einsatz durch einen von dem in die Druckkammer einströmenden Formiergas ausgeübten Druck automatisch gegen das zu verschweißende Material gedrückt wird. Ein weiterer Vorteil der Erfindung besteht darin, dass aufgrund der erfindungsgemäßen Bauart der Verschleiß der Formiergaskappe minimiert wird.

Vorteilhafterweise weist der rohrförmige Mantel an zumindest einem seiner Endbereiche einen nach innen weisenden Vorsprung auf. Weiters kann der Einsatz an seinem äußeren Umfang zumindest einen ringförmig umlaufenden Vorsprung aufweisen, der mit zumindest einem Vorsprung des Mantels, einen die Bewegungsfreiheit des Einsatzes in Längsrichtung des Mantels begrenzenden Anschlag bildet.

Weiters kann durch den ringförmigen Vorsprung und den Seitenwänden des Mantels die Druckkammer teilweise begrenzt sein. Vorteilhafterweise liegt der Vorsprung des Einsatzes an der inneren Oberfläche des Mantels im Wesentlichen an.

Weiters kann an einem in einem montierten Zustand unteren Ende des Mantels ein ringförmiger Einsatz vorgesehen sein, der bevorzugterweise in den Mantel eingepresst ist. Im Folgenden wir dieser Einsatz als "Befestigungs-/Dichtring" bezeichnet.

Die oben genannte Aufgabe lässt sich auch mit einer Vorrichtung der eingangs genannten Art erfindungsgemäß dadurch lösen, dass eine Formiergaskappe gemäß einem der Ansprüche 1 bis 6 vorgesehen ist, wobei der Einsatz während eines Schweißvorgangs durch den Formiergasdruck gegen ein zu schweißendes Material gepresst ist.

Gemäß einer bevorzugten Ausführungsform ist die Formiergaskappe in einem montierten Zustand kraftschlüssig mit der Elektrode verbunden. Zur Herstellung des Kraftschlusses zwischen der Formiergaskappe und der Elektrode kann der Durchmesser des "Befestigungs-/Dichtring" so gewählt werden, dass er an der Elektrode eng anliegt. Die Formiergaskappe wird nach der Montage durch die zwischen dem "Befestigungs-/Dichtring' und der Elektrode wirkenden Reibungskräfte an ihrer Position gehalten.

Vorteilhafterweise wird die Formiergaskappe auf einer unteren von zwei übereinander angeordneten Elektroden angeordnet ist. Auf diese Weise lässt sich sehr einfach erreichen, dass der Einsatz nach Abfall des Formiergasdruckes aufgrund der Schwerkraft wieder in seine ursprüngliche Position fällt.

Gemäß der bevorzugten Ausführungsform der Erfindung ist der Mantel aus Metall oder Kunststoff und der Einsatz aus Kunststoff gefertigt.

Die Erfindung samt weiteren Vorteilen wird im Folgenden anhand einiger nicht einschränkender Ausführungsbeispiele näher erläutert, welche in der Zeichnung dargestellt sind. In dieser zeigen schematisch:
Fig. 1 einen Schnitt durch eine erfindungsgemäße Formierkappe in einem montierten Zustand;
Fig. 2 die Formierkappe aus Fig. 1 mit zwei miteinander zu verschweißenden Metallblechen;
Fig. 3 ein Detail einer erfindungsgemäßen Vorrichtung mit einer unteren und einer oberen Elektrode vor einem Schweißvorgang;
Fig. 4 das Detail der erfindungsgemäßen Vorrichtung aus Fig. 3 unmittelbar vor einem Schweißvorgang;
Fig. 5 das Detail aus Fig. 4 während des Schweißvorganges und
Fig. 6 die untere Elektrode aus Fig. 5 nach Beendigung des Schweißvorgangs.

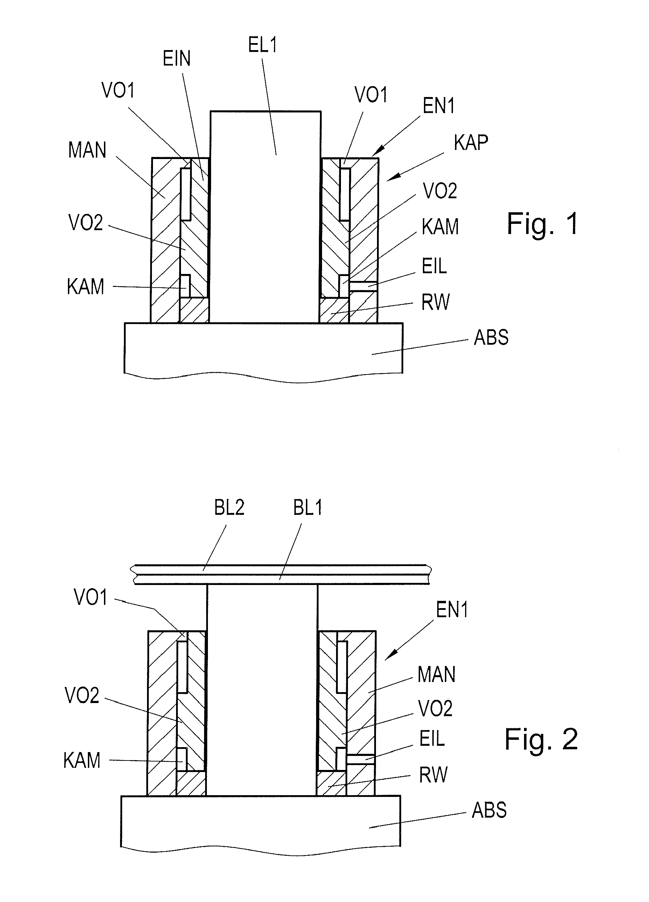

Gemäß Fig. 1 - Fig. 6 weist eine erfindungsgemäße Formiergaskappe KAP für eine Elektrode EL1 einer Vorrichtung zum Punktschweißen einen rohrförmigen Mantel MAN und einen darin entlang der Längsachse des Mantels MAN verschiebbaren Einsatz EIN auf. In einem montierten Zustand ist der Einsatz EIN von der Elektrode EL1 durchsetzt. Bevorzugterweise sind der Einsatz EIN aus Kunststoff und der Mantel MAN aus Metall gefertigt.

Der Mantel MAN weist eine Gaseinlassöffnung EIL auf, die in eine durch einen ringförmige umlaufenden Vorsprung V02 des Einsatzes EIN und den Mantel MAN sowie einen bevorzugterweise aus Metall gefertigten Befestigungs-/Dichtring RW begrenzte Druckkammer KAM mündet. Der Vorsprung V02 des Einsatzes EIN liegt günstigerweise an der inneren Oberfläche des Mantels MAN an, um eine gute Führung des Einsatzes EIN in dem Mantel MAN zu gewährleisten, und um ein Herausströmen des Formiergases neben der eigentlichen Schweißstelle zu verhindern.

Weiters weist der der rohrförmige Mantel MAN an einem seiner Endbereiche EN1 einen nach innen weisenden Vorsprung VO1 auf, der mit dem Vorsprung V02 des Einsatzes EIN einen die Bewegungsfreiheit des Einsatzes EIN in Längsrichtung des Mantels MAN begrenzenden Anschlag bildet. Auf diese Weise kann der Einsatz EIN in dem Mantel gegen ein Herausfallen gesichert werden.

Der oben erwähnte Befestigungs-/Dichtring RW ist gemäß der bevorzugten Ausführungsform der Erfindung in den Mantel MAN eingepresst und hindert den Einsatz EIN so wie der Vorsprung VO1 an einem Herausfallen aus dem Mantel MAN.

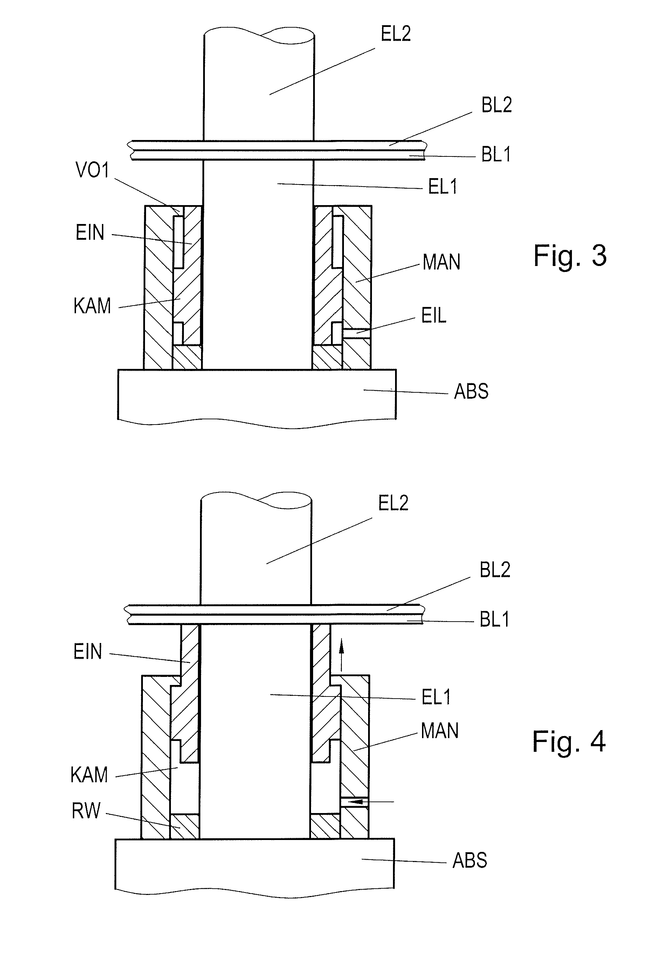

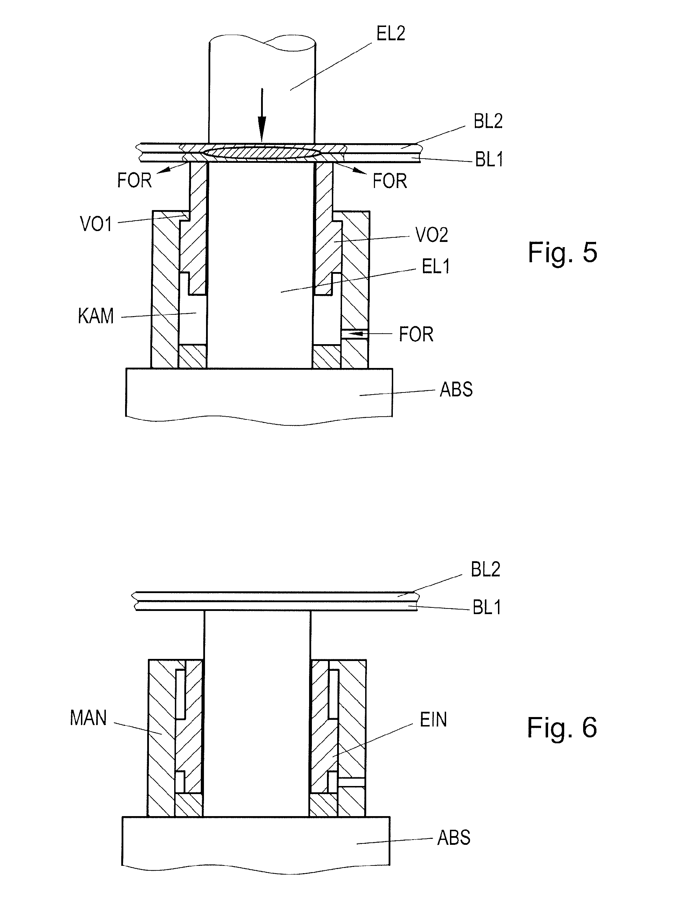

Durch Einströmen von Formiergas in die Druckkammer KAM wird der Einsatz EIN in Richtung eines zu verschweißenden Materials gedrückt, beispielsweise gegen eines von zwei miteinander zu verschweißenden Blechen welche in den Figuren 2 bis 6 mit den Bezugszeichen BL2 bzw. BL1 bezeichnet sind. In einem zwischen dem Einsatz EIN und der Elektrode EL1 gelegenen Zwischenraum kann das Formiergas FOR während des Schweißens an die Schweißstelle strömen und diese so vor einer Oxidation schützen (Fig. 4 und 5).

Wie aus Fig. 4 und 5 weiters ersichtlich ist, ist bei der bevorzugten Ausführungsform einer erfindungsgemäßen Vorrichtung zum Punktschweißen nur an einer unteren von zwei übereinander liegenden Elektroden EL1, EL2 eine erfindungsgemäße Formiergaskappe KAP vorgesehen. Dies hat den Vorteil, dass nach Abfall des Gasdruckes in der Druckkammer KAM bzw. nach Beendigung des Schweißvorganges der Einsatz EIN wieder in seiner ursprüngliche Position fällt (Fig. 6). Grundsätzlich könnte jedoch auch an der oberen Elektrode EL2 eine erfindungsgemäße Formiergaskappe KAP angeordnet sein.

Darüber hinaus ist die Formiergaskappe KAP mit der Elektrode EL1 kraftschlüssig verbunden. Dies lässt sich dadurch bewerkstelligen, dass der innere Durchmesser des Befestigungs-/Dichtringes RW in etwa dem äußeren Umfang der Elektrode EL1 entspricht, die beispielsweise zylinderförmig oder auch konisch ausgebildet sein kann. Die Formiergaskappe KAP wird somit durch die zwischen dem Befestigungs-/Dichtringes RW und der Elektrode EL1 wirkenden Reibungskräfte auf der Elektrode EL1 fixiert.

## Patentansprüche

1. Formiergaskappe (KAP) für eine Elektrode (EL1) zum Punktschweißen, **dadurch gekennzeichnet, dass** die Formiergaskappe (KAP) einen rohrförmigen Mantel (MAN) und einen darin entlang der Längsachse des Mantels (MAN) verschiebbaren, von der Elektrode in einem montierten Zustand durchsetzten Einsatz (EIN) aufweist, wobei der Mantel (MAN) zumindest eine Gaseinlassöffnung (EIL) aufweist, die in eine durch den Einsatz (EIN) und den Mantel (MAN) zumindest abschnittsweise begrenzte Druckkammer (KAM) mündet.

2. Formiergaskappe nach Anspruch 1, **dadurch gekennzeichnet, dass** der rohrförmige Mantel (MAN) an zumindest einem seiner Endbereiche (EN1) einen nach innen weisenden Vorsprung (VO1) aufweist.

3. Formiergaskappe nach Anspruch 2, **dadurch gekennzeichnet, dass** der Einsatz (EIN) an seinem äußeren Umfang zumindest einen ringförmig umlaufenden Vorsprung (V02) aufweist, der mit zumindest einem Vorsprung (VO1) des Mantels (MAN) einen die Bewegungsfreiheit des Einsatzes (EIN) in Längsrichtung des Mantels (MAN) begrenzenden Anschlag bildet.

4. Formiergaskappe nach Anspruch 3, **dadurch gekennzeichnet, dass** der Vorsprung (V02) des Einsatzes (EIN) an der inneren Oberfläche des Mantels (MAN) im Wesentlichen anliegt.

5. Formiergaskappe nach einem der Ansprüche 1 bis 4, **dadurch gekennzeichnet, dass** an einem in einem montierten Zustand unteren Ende des Mantels (MAN) ein ringförmiger Einsatz (RIN) vorgesehen ist.

6. Formiergaskappe nach Anspruch 4, **dadurch gekennzeichnet, dass** der ringförmige Einsatz in den Mantel eingepresst ist.

7. Vorrichtung zum Punktschweißen mit zwei einander gegenüberliegenden Elektroden, wobei zumindest an einer der Elektroden eine Formiergaskappe angeordnet ist **dadurch gekennzeichnet, dass** die Formiergaskappe gemäß einem der Ansprüche 1 bis 6 ausgebildet ist, wobei der Einsatz (EIN) während eines Schweißvorgangs durch den Formiergasdruck gegen ein zu schweißendes Material (BL1, BL2) gepresst ist.

8. Vorrichtung nach Anspruch 7, **dadurch gekennzeichnet, dass** die Formiergaskappe kraftschlüssig mit der Elektrode verbunden ist.

9. Vorrichtung nach Anspruch 7 oder 8, **dadurch gekennzeichnet, dass** die Formiergaskappe auf einer unteren von zwei übereinander angeordneten Elektroden angeordnet ist.

10. Vorrichtung nach einem der Ansprüche 7 bis 9, **dadurch gekennzeichnet, dass** der Mantel aus Metall oder Kunststoff und der Einsatz aus Kunststoff gefertigt ist.
